# EUROPÄISCHE PATENTANMELDUNG

(11) **EP 4 734 070 A1**
(43) Veröffentlichungstag der Anmeldung: **29.04.2026**
(21) Anmeldenummer: 25208856.2
(22) Anmeldetag: 15.10.2025
(51) Int. Cl.: G06V 10/12, G06V 10/143, G06V 20/52, G06V 40/16

(54) **VERFAHREN UND VORRICHTUNG ZUM ERFASSEN BIOMETRISCHER MERKMALE MIT PERSONENERKENNUNG**

(30) Priorität: 23.10.2024 DE 102024003543
(71) Anmelder: Bundesdruckerei GmbH, 10969 Berlin (DE)
(72) Erfinder: Dr. Szegvari, Piotr, 14469 Potsdam (DE)

(57) **Zusammenfassung**

Die Erfindung betrifft ein Verfahren zum automatisierten Betreiben einer Vorrichtung (101) zum Erfassen von biometrischen Merkmalen einer Person, mit einer ersten Bildaufnahmeeinrichtung (1) zum Empfangen von Wärmebilddaten der Person (102) sowie einer zweiten Bildaufnahmeeinrichtung (2) zur Erfassung biometrischer Merkmale der Person (102). Für einen effizienten, zuverlässigen und datenschutzkonformen Betrieb der Vorrichtung werden Wärmebilddaten eines Aufnahmebereichs (104) der Vorrichtung (101) mittels der ersten Bildaufnahmeeinrichtung (1) empfangen, um mittels der empfangenen Wärmebilddaten die Person (102) im Aufnahmebereich, insbesondere den Kopf und/oder das Gesicht der Person (102), zu bestimmen. Anschließend erfolgt ein Aktivieren und/oder Starten wenigstens einer weiteren Funktion der Vorrichtung (101).

## Beschreibung

Die vorliegende Erfindung betrifft ein Verfahren zum automatisierten Betreiben einer Vorrichtung zum Erfassen von biometrischen Merkmalen einer Person sowie ein entsprechendes Datenerfassungssystem.

Es ist bekannt, Personen anhand von biometrischen Merkmalen zu identifizieren. Solche biometrischen Merkmale können auf Sicherheitsdokumenten, wie beispielsweise Ausweisen oder Pässen Verwendung finden. Mittels des biometrischen Passbildes ist das Sicherheitsdokument personalisiert und ermöglicht ein Identifizieren der Person, wahlweise in Verbindung mit weiteren Sicherheitselementen des Sicherheitsdokuments.

Durch Authentifizierungsverfahren, z.B. durch ein Verfahren zur Überprüfung der Identität einer Person, kann verhindert werden, dass unbefugte Personen auf sensible Informationen oder Dienste zugreifen. Beispielsweise können auf der Grundlage des Authentifizierungsergebnisses eines Benutzers Zugangskontrollsignale erzeugt werden, um dem Benutzer den Zugang zu kontrollierten Diensten oder kontrollierten Bereichen zu ermöglichen oder zu verwehren.

Die Authentifizierung kann anhand eines Bildes des Benutzers erfolgen. Beispielsweise kann ein automatisches Grenzkontrollsystem oder ein automatisches Tor das Bild verwenden, um die Identität des Benutzers zu überprüfen. Nachdem die Identität des Benutzers überprüft wurde, öffnet sich eine physische Schranke, z. B. ein Tor, um den Durchgang zu ermöglichen.

In der ISO 39794-5 sind eine Reihe von Anforderungen an die zu erfassenden Porträts definiert. Daraus ergibt sich zum Beispiel, dass für gute Ergebnisse biometrischer Vergleichsalgorithmen für Gesicht und Iris die entsprechenden Kameraaufnahmen so frontal wie möglich erfolgen sollen. Zudem wird ein Mindestabstand zwischen Gesicht und Sensor (Kamera) von mindestens einem Meter gefordert.

Mit Hilfe von Vorrichtungen der genannten Art können ein oder mehrere verschiedene biometrische Merkmale erfasst werden. Biometrische Portraits können mit Hilfe einer Bildaufnahmeeinrichtung aufgenommen werden. Vorrichtungen zum Erfassen der biometrischen Identifizierungsmerkmale sind hierzu mit einer Bildaufnahmeeinrichtung ausgestattet.

Vorrichtungen zum Erfassen von biometrischen Merkmalen können beispielsweise in Meldeämtern dazu eingesetzt werden, um unter Verwendung der erfassten biometrischen Merkmale ein Sicherheitsdokument wie eine Identitätskarte oder einen Reisepass zu erstellen. Die biometrischen Merkmale können zum Beispiel als maschinenlesbare Daten in einem elektronischen Speicher des Sicherheitsdokuments und / oder als aufgedrucktes Bild aufgebracht bzw. gespeichert werden.

Um das unbeabsichtigte Mitlesen von Eingabe- und Bilddaten vor oder während der Bedienung einer Vorrichtung der zu verhindern, ist es notwendig zu erkennen, ob sich noch eine Person vor dem Gerät direkt befindet oder nicht. Dafür können beispielsweise Sensoren Verwendung finden, mit deren Hilfe eine solche Detektion möglich ist.

Die zum Zeitpunkt dieser Anmeldung noch nicht veröffentlichte deutsche Patentanmeldung DE102024102319.8 offenbart eine als Kiosk-Terminal ausgestaltete Vorrichtung mit einer Höheneinstellung der Kameraeinrichtung, bei der die Erfassung biometrischer Merkmale durch einen Näherungssensor ausgelöst wird.

Nachteilig an bekannten Lösungen für das automatisierte Betreiben von Vorrichtungen zum Erfassen biometrischer Merkmale von Personen ist der mit der Erkennung von Personen verbundene Aufwand, z.B. in Form von zusätzlichen Sensoren.

Es ist die Aufgabe der vorliegenden Erfindung, ein Verfahren und eine Vorrichtung zum automatisierten Bestimmen biometrischer Bilddaten bereitzustellen, mit denen die Erfassung biometrischer Merkmale effizient und datenschutzkonform ausgeführt werden kann.

Des Weiteren ist die Aufgabe der Erfindung, ein Verfahren und eine Vorrichtung der oben genannten Art bereitzustellen, die eine robuste, fehlertolerante Einzel-Person-Erkennung ermöglichen, unter Einhaltung des Datenschutzes, die nur wenig Ressourcen benötig und somit eine sehr geringe Verzögerung und hohe Reaktionszeit besitzt.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Gemäß einem ersten Aspekt der Erfindung weist das erfindungsgemäße Verfahren zum automatisierten Betreiben einer Vorrichtung zum Erfassen von biometrischen Merkmalen einer Person folgende Schritte auf: Zunächst wird eine Vorrichtung zum Erfassen von biometrischen Merkmalen einer Person, mit einer ersten Bildaufnahmeeinrichtung zum Aufnehmen von Wärmebilddaten einer Person sowie einer zweiten Bildaufnahmeeinrichtung zur Erfassung biometrischer Merkmale der Person bereitgestellt. Es werden mittels der ersten Bildaufnahmeeinrichtung Wärmebilddaten eines Aufnahmebereichs der Vorrichtung empfangen. Mittels der empfangenen Wärmebilddaten wird die Person im Aufnahmebereich bestimmt, insbesondere ein Kopf und/oder ein Gesicht der Person. Es folgt die Aktivierung und/oder ein Starten wenigstens einer weiteren Funktion der Vorrichtung.

Vorliegend wird unter einer Bildaufnahmeeinrichtung eine zur Aufnahme von Bildern geeignete Einrichtung verstanden. Die erste Bildaufnahmeeinrichtung kann einen Wärmebildsensor für den Empfang digitaler Wärmebilddaten aufweisen, die zweite Bildaufnahmeeinrichtung einen digitalen Bildsensor für den Empfang digitaler Bilddaten, insbesondere Farbbilddaten.

Die erste und/oder die zweite Bildaufnahmeeinrichtung kann vorzugsweise in eine Kameraeinrichtung aufgenommen sein. Die Kameraeinrichtung kann des Weiteren vorzugsweise ein Objektiv aufweisen.

Es kann vorzugsweise eine Kameraeinrichtung vorgesehen sein, welche die erste und die zweite Bildaufnahmeeinrichtung umfasst. Der Bildsensor der ersten und der zweiten Bildaufnahmeeinrichtung können gemeinsam auf der Bildebene eines Objektivs der Kameraeinrichtung angeordnet sein.

Die Bestimmung der Person im Aufnahmebereich kann vorzugsweise ein Detektieren der Person, insbesondere ein erstmaliges Detektieren der Person sein. Vorliegend ist mit "Detektieren" das Erkennen des Vorhandenseins gemeint. Nur wenn eine Person im Aufnahmebereich detektiert wird, folgt der nächste Schritt des Verfahrens, nämlich die Aktivierung und/oder ein Starten wenigstens einer weiteren Funktion der Vorrichtung

Mittels der ersten Bildaufnahmeeinrichtung kann nicht nur bestimmt werden, ob sich eine Person im Aufnahmebereich befindet, sondern im Weiteren auch ein Verfahren zur Erkennung lebender Personen durchgeführt werden, um mögliche Täuschungen bei der Erfassung biometrischer Daten zu verhindern. Die erste Bildaufnahmeeinrichtung kann somit mehrere Funktionen erfüllen, ohne dass zusätzliche Sensoren zur Erkennung einer Person benötigt werden. Somit sind Kosteneinsparungen möglich.

Das erfindungsgemäße Verfahren ermöglicht, dass auf weitere Sensoren zur Detektion von Personen, wie z.B. einen Näherungssensor zur Detektion einer Annäherung der Person an die Vorrichtung, verzichtet werden kann. Vorzugsweise erfolgt die Detektion der Person, zumindest zunächst, allein mittels der von der ersten Bildaufnahmeeinrichtung empfangenen Wärmebilddaten.

Die weitere Funktion der Vorrichtung, die nach der Bestimmung der Person aktiviert bzw. gestartet wird, kann beispielsweise eine Bildschirmanzeige sein, die der Person nach Aktivierung Informationen über die Inbetriebnahme der Vorrichtung, den Betriebsstatus der Vorrichtung und/oder mögliche Bedienaktionen anzeigt. Beispielsweise kann ein Begrüßungsbild angezeigt werden. Es kann alternativ oder zusätzlich eine Betriebsanzeige aktiviert werden, die der Person den Betrieb der Vorrichtung anzeigt.

In bevorzugten Ausführungen der Erfindung kann die weitere Funktion der Vorrichtung, die nach der Bestimmung der Person aktiviert bzw. gestartet wird, eine automatische Einstellung der Vorrichtung sein. Insbesondere kann eine automatische Einstellung der Höhe der zweiten Kameraeinrichtung mittels einer Stelleinrichtung gestartet werden. Alternativ oder zusätzlich kann die Bildaufnahmeeinrichtung bzw. die Kameraeinrichtung für die im Aufnahmebereich befindliche Person angepasst werden, z.B. indem Belichtungsparameter und/oder der Fokus eines Objektivs eingestellt werden.

Gemäß einer Variante der Erfindung kann eine Bedieneinrichtung der Vorrichtung aktiviert werden, um der im Aufnahmebereich befindlichen Person die Bedienung der Vorrichtung zu ermöglichen. Insbesondere kann ein Touchscreen aktiviert werden, welcher der Person Bedienelemente zur weiteren Bedienung der Vorrichtung bereitstellt.

In einer weiteren Ausführungsform der Erfindung kann nach der Bestimmung einer Person die zweite Bildaufnahmeeinrichtung der Vorrichtung aktiviert werden. Vorzugsweise kann dann mittels der zweiten Bildaufnahmeeinrichtung die Position der im Aufnahmebereich befindlichen Person insbesondere genauer bestimmt werden, indem mittels der zweiten Bildaufnahmeeinrichtung Bilddaten empfangen werden, anhand derer die Position der Person bestimmt wird. Zudem können auch mittels der zweiten Bildaufnahmeeinrichtung Bewegungen bzw. Bewegungsmuster der Person bestimmt werden. Schließlich kann unmittelbar damit begonnen werden, Bilder zur Erfassung biometrischer Merkmale zu empfangen, die für die Anpassung an die Person im Aufnahmebereich ausgewertet werden.

In weiteren Ausführungen der Erfindung kann bereits nach der Bestimmung der Person ein Erfassungsvorgang zur Erfassung biometrischer Merkmale ausgeführt werden. So kann bereits der Empfang von Bilddaten der Person, insbesondere die Aufnahme biometrischer Bilder beginnen.

Zu erfassende biometrische Merkmale können insbesondere biometrische Identifizierungsmerkmale (ID-Merkmale) sein, die sich für die Verwendung in Sicherheitsdokumenten und/oder Authentifizierungssystemen eignen. Vorzugsweise werden biometrische Bilder gemäß dem Standard der ICAO (International Civil Aviation Organization) für Passbilder für maschinenlesbare Sicherheitsdokumente erfasst.

In besonderen Ausführungsformen der Erfindung kann ein Näherungssensor vorgesehen sein, um die erste Bildaufnahmeeinrichtung erst dann zu aktivieren, wenn eine Person den Aufnahmebereich betritt. Nach der Aktivierung der ersten Bildaufnahmeeinrichtung werden Wärmebilddaten empfangen und zur Erkennung einer aufnahmebereiten Person im Aufnahmebereich ausgewertet.

Der Aufnahmebereich ist vorzugsweise ein durch die erste Bildaufnahmeeinrichtung und/oder die zweite Bildaufnahmeeinrichtung erfassbarer Bereich. Der Aufnahmebereich kann durch eine vorbestimmte Fläche, insbesondere Standfläche, vor der Vorrichtung begrenzt sein, auf der sich die Person bei der Erfassung der biometrischen Merkmale aufhalten kann. Idealerweise ist die vorbestimmte Fläche vor der Vorrichtung zur Erkennung durch die Bedienperson oder Passanten markiert. Der Aufnahmebereich kann des Weiteren als ein Raum vor der Vorrichtung definiert sein.

Mittels der ersten Bildaufnahmeeinrichtung kann eine Vielzahl von Wärmebildern empfangen werden. In bevorzugten Ausführungsformen werden Wärmebilddaten von der ersten Bildaufnahmeeinrichtung als eine Wärmebildfolge, insbesondere als Serienbilder bzw. Videostream bereitgestellt. Die Wärmebilddaten können insbesondere als kontinuierlicher Wärmebilddatenstrom bereitgestellt werden. Der Vorteil des Empfangs einer Wärmebildfolge oder eines kontinuierlichen Wärmebilddatenstroms ist, dass Bewegungen von Wärmeinhomogenitäten oder von Clustern von Wärmeinhomogenitäten bzw. einer erkannten Person bestimmt werden können, um z.B. die Aufnahmebereitschaft einer in einem Aufnahmebereich befindlichen Person zu bestimmen. Des Weiteren kann auf diese Weise die Aufnahmebereitschaft kontinuierlich geprüft werden, um auch eine Beendigung der Aufnahmebereitschaft der Person zu erkennen.

Es kann vorzugsweise mittels der Wärmebildfolge bzw. der Wärmebilddatenstroms ein Bewegungsmuster von wenigstens einer Wärmeinhomogenität, von einem Wärmecluster und/oder von einer detektierten Person bestimmt und mit einem oder mehreren Referenzbewegungsmustern verglichen werden, um die tatsächliche Position der Person zu bestimmen. Auf diese Weise kann z.B. ein Beugen des Kopfes der Person erkannt werden, um in diesem Fall ein unbeabsichtigtes Unterbrechen des Bedienvorgangs zu vermeiden.

Unter einer Wärmeinhomogenität wird eine Abweichung von der Wärmeverteilung im Aufnahmebereich verstanden. Als Referenz kann dazu die Wärmeverteilung im Aufnahmebereich zunächst ohne Person im Aufnahmebereich bestimmt werden. Befindet sich eine Person im Aufnahmebereich, bildet diese eine Wärmequelle, in deren Bereich die Temperaturen erhöht sind.

Im Rahmen dieser Anmeldung bedeutet aufnahmebereit, dass sich die Person zumindest in den Aufnahmebereich der Vorrichtung begeben hat. Die Bereitschaft der Person, biometrische Merkmale erfassen zu lassen, kann sich im Weiteren durch die Bewegungen und die Orientierung des Körpers der Person erschließen.

In weiteren Ausführungsformen der Erfindung kann nach der Bestimmung einer Person eine Bestimmung der Position der Person im Aufnahmebereich erfolgen. Je nach Position der Person kann die Aufnahmebereitschaft der Person bestimmt werden. Wird eine Person aufgrund der eingenommenen Position als nicht-aufnahmebereit erkannt, wird vorzugsweise die Position der Person so lange bestimmt, bis die Aufnahmebereitschaft erkannt ist. Erst dann folgt die Aktivierung und/oder Ausführung wenigstens einer weiteren Funktion der Vorrichtung. Auf diese Weise wird die berührungslose Bedienung der Vorrichtung weiter verbessert.

Gemäß einer Ausführungsform kann die Position der Person innerhalb des Aufnahmebereiches das alleinige Kriterium für das Bestimmen der Aufnahmebereitschaft sein. Befindet sich die Person oder zumindest der Kopf und/oder das Gesicht der Person innerhalb des Aufnahmebereiches, wird die Person als aufnahmebereit erkannt. Entsprechend kann die Erfassung biometrischer Merkmale bereits beginnen, sobald eine Person den Aufnahmebereich betritt. Auf diese Weise kann der Erfassungsprozess zügig gestartet und durchgeführt werden.

Alternativ oder zusätzlich kann bestimmt werden, ob sich die Person innerhalb des Aufnahmebereiches in einer Bedienposition befindet. Zum Beispiel kann mittels der empfangenen Wärmebilddaten bestimmt werden, ob die Person der zweiten Bildaufnahmeeinrichtung zugewandt ist. Dazu kann die Ausrichtung des Körpers und/oder die Ausrichtung des Kopfes bestimmt werden. Die Ausrichtung des Kopfes kann insbesondere über die Bestimmung der Silhouette des Kopfes erfolgen. Beispielsweise können bei einem zur Seite gewandten Kopf der Person Asymmetrien im Wärmebild auftreten, die durch die Vorrichtung bestimmt werden.

In weiteren Ausführungsformen kann die Aufnahmebereitschaft der Person alternativ oder zusätzlich durch die Bestimmung eines Bewegungsmusters bestimmt werden. Bewegt sich z.B. die der Person zugeordnete Wärmequelle kontinuierlich an der Vorrichtung vorbei oder von der Vorrichtung weg, d.h. die Erstreckung eines Clusters von Wärmeinhomogenitäten wird kleiner, wird die Person als nicht aufnahmebereit erkannt.

Des Weiteren kann zur Ermittlung der Aufnahmebereitschaft bestimmt werden, ob die Person und/oder der Kopf und/oder das Gesicht der Person sich randseitig oder mittig im Aufnahmebereich befindet.

In einer weiteren Ausführungsform kann, insbesondere nachdem die Position der Person im Aufnahmebereich bestimmt wurde, z.B. weil sich der Kopf und/oder das Gesicht der Person sich im Aufnahmebereich befinden, mittels von der zweiten Bildaufnahmeeinrichtung empfangener Bilddaten in einem weiteren Schritt die Blickrichtung und/oder die Ausrichtung des Gesichtes der Person bestimmt werden. Ist die Person der zweiten Bildaufnahmeeinrichtung zugewandt, kann die Person als aufnahmebereit erkannt werden.

Gemäß einer Weiterbildung der Erfindung werden kontinuierlich Wärmebilddaten, insbesondere in einem Videostream empfangen und das Aktivieren und/oder Starten wenigstens einer weiteren Funktion der Vorrichtung erfolgt, sobald sich eine Person im Aufnahmebereich befindet. Die weitere Funktion der Vorrichtung bleibt bevorzugt so lange aktiviert bzw. die weitere Funktion der Vorrichtung wird so lange ausgeführt, bis keine Person mehr im Aufnahmebereich bestimmt wird bzw. die Person den Aufnahmebereich wieder verlässt.

Ein einmal als einer Person, insbesondere dem Kopf einer Person zugehörig bestimmtes Cluster von Wärmeinhomogenitäten kann im Weiteren bis zum Verlassen des Aufnahmebereichs entsprechend als zugehörig markiert und/oder nachverfolgt werden, so dass eine Veränderung des Clusters in empfangenen Wärmebildern, ohne dass sich dieses aus dem Aufnahmebereich herausbewegt, nicht zu einem Abbruch des Bedienvorgangs der Vorrichtung führt. Ein Wegschauen oder Umdrehen oder sonstige Bewegungen der Person im Aufnahmebereich führen somit nicht zu einem Abbruch der Benutzung.

Gemäß einer bevorzugten Variante der Erfindung erfolgt der Empfang von Wärmebilddaten sowie die Bestimmung der Person kontinuierlich, beispielsweise über eine Serienbildaufnahme von Wärmebilddaten oder einen Videostream, wobei nach dem Aktivieren und/oder Starten wenigstens einer weiteren Funktion der Vorrichtung die Aktivierung und/oder Ausführung der weiteren Funktion der Vorrichtung beendet wird, falls oder sobald keine Person mehr im Aufnahmebereich bestimmt wird. Wird ein nicht abgeschlossener Vorgang zur Erfassung biometrischer Merkmale abgebrochen, werden vorzugsweise sämtliche bis dahin erfassten, in der Vorrichtung zwischengespeicherten Bilddaten gelöscht.

Die Bestimmung der Position der Person umfasst in einer weiteren Variante der Erfindung die Bestimmung der Position des Kopfes in vertikaler Richtung. Insbesondere kann die Höhe der Kopfposition bestimmt werden. Des Weiteren kann die Position weiterer Körperteile mittels Bestimmung der Höhe des Kopfes und mittels auf die Kopfhöhe bezogener, in einer Steuer- und/oder Auswerteeinrichtung gespeicherter Referenzproportionen bestimmt werden.

In einer Weiterbildung der Erfindung kann die Bestimmung der Position der Person die Bestimmung des Abstandes der Person von der Vorrichtung umfassen, um die Aufnahmebereitschaft der Person zu bestimmen. Bevorzugt wird der Abstand mittels der Wärmebilddaten bestimmt, beispielsweise durch eine Bestimmung der Querschnittsfläche des Wärmebildes des Kopfes der erfassten Person und/oder die Bestimmung eines Verhältnisses der Querschnittsfläche zur Höhe und/oder Breite des Wärmebildes der erfassten Person. Vorzugsweise kann die Größe des Kopfes bestimmt werden. Mit der Bestimmung der Größe des Kopfes kann zusätzlich mit üblichen Proportionsregeln von der Größe des Kopfes die Größe des Körpers oder die Größe der Person abgeleitet werden.

In weiteren Ausführungsformen sind die mittels der ersten Bildaufnahmeeinrichtung empfangenen Wärmebilddaten gegenüber den mittels der zweiten Bildaufnahmeeinrichtung empfangenen oder empfangbaren Bilddaten reduziert. Vorzugsweise werden die Wärmebilddaten von der ersten Bildaufnahmeeinrichtung derart reduziert empfangen und/oder nach dem Empfang reduziert, dass keine Identifizierungsmerkmale oder zur Identifizierung der Person geeignete Merkmale zwischengespeichert werden. Indem zumindest zunächst insbesondere gering auflösende Wärmebilddaten für die Bestimmung der Position einer im Aufnahmebereich befindlichen Person verwendet werden, kann die Bestimmung auch bei geringer Rechenleistung einer Auswerte- und/oder Steuereinrichtung, in welcher die Bestimmung erfolgt, zügig, idealerweise ohne durch die bedienende Person wahrnehmbare Verzögerungen, und trotzdem zuverlässig erfolgen. Tritt beispielsweise eine Familie gemeinsam vor eine erfindungsgemäße Vorrichtung, während nur die primär vor dem Gerät befindliche Position die Vorrichtung bedienen möchte, ist eine zuverlässige und zügige Reaktion der Vorrichtung von besonderer Bedeutung. Eine Familie verhält sich häufig sehr unruhig und die Bedienperson wird sich evtl. häufiger umdrehen und mit den Familienmitgliedern reden, während die Vorrichtung versucht, die Person im Aufnahmebereich zu bestimmen, deren biometrische Merkmale zu erfassen sind. Mit einer herkömmlichen Gesichtsbilderkennung mittels hochauflösender Bilder bzw. mittels eines hochauflösenden Videostreams, die oder der beispielsweise mittels der zweiten Bildaufnahmeeinrichtung empfangen werden könnte, wären deutlich mehr Daten durch die Steuer- bzw. Auswerteeinrichtung der Vorrichtung zu verarbeiten. Dies würde zu Verzögerungen bei der Bestimmung der Person führen, insbesondere nach Bewegungen der Person.

Mit der hier vorgestellten Erfindung wird der Kopf bevorzugt als primäre Wärmequelle im Ganzen erkannt, unabhängig von der Blickrichtung der Person im Aufnahmebereich. Das Zentrum dieser Wärmequelle kann vorzugsweise nahezu ohne Verzögerung bestimmt werden. Insbesondere kann somit auch eine grobe Position der Person zunächst bestimmt werden, um anschließend, nach einer festgelegten Sättigungsphase, in eine Einstellung der Vorrichtung, z.B. eine feine Höheneinstellung unter Verwendung einer Gesichtsbilderkennung mittels der zweiten Bildaufnahmeeinrichtung, überzugehen.

Zur Bestimmung einer Person mittels der Wärmebilddaten kann ein Vision-Algorithmus angewendet werden, um eine zuverlässige Personenerkennung zu ermöglichen.

Eine geringe Verzögerung in der Datenverarbeitung und damit auch die Verwendung von geringen Ressourcen im System ist somit mit einer sehr gering auflösenden Thermo-Kamera sehr gut möglich. Auch die hohe Fehlertoleranz und Robustheit kann durch eine sehr großzügige Auflösung in Kombination mit Vision-Algorithmen, die nur wenige Bilddetails benötigen, erreicht werden. In weiteren Ausführungsformen wird daher eine geringauflösende Thermo-Kamera in Verbindung mit einem Vision-Algorithmus verwendet, der eine primäre Wärmepunktwolke vor dem Gerät von anderen eventuell vorhandenen kleineren beweglichen wie auch nicht beweglichen Wärmequellen unterscheiden kann.

Die empfangene Wärmepunktwolke einer Person wird sich über die Zeit nur marginal an den Rändern verändern, das Zentrum wird im Erkennungsfall sehr stabil ausgeprägt sein. Es kann somit ein Schwellwert für eine zu große und/oder eine zu kleine Wärmepunktwolke definiert sein, ab dem eine Person nicht bestimmt oder als nicht aufnahmebereit erkannt wird. Somit kann die Robustheit und gleichzeitig die Sensitivität der Personenerkennung zusätzlich erhöht werden. Zudem kann auf diese Weise bei Empfang eines Videostreams auch eine Bewegungsrichtung der Person bestimmt werden.

Erste und/oder zweite Bildaufnahmeeinrichtung sind bevorzugt ausgestaltet, statische und/oder bewegte Bilder über eine Schnittstelle zu übermitteln und/oder auf einem Speichermedium aufzuzeichnen. Gemäß einer bevorzugten Ausführungsform der Erfindung sind erste und/oder zweite Bildaufnahmeeinrichtung mit einem elektronischen Bildsensor versehen. Vorzugsweise weisen erste und/oder zweite Bildaufnahmeeinrichtung außerdem ein wenigstens eine Linse umfassendes Objektiv auf, welche zu erfassende Bilder auf den jeweiligen elektronischen Sensor projiziert.

Die erste Bildaufnahmeeinrichtung ist vorzugsweise für den Empfang von Infrarotstrahlung, d.h. Strahlung mit einer Wellenlänge zwischen 780 nm und 1 mm, konfiguriert, die zweite Bildaufnahmeeinrichtung für den Empfang von Strahlung im wahrnehmbaren Bereich, d.h. Strahlung mit einer Wellenlänge von ca. 360 nm bis 830 nm.

In weiteren Ausführungsformen kann die erste Bildaufnahmeeinrichtung, insbesondere der Sensor der ersten Bildaufnahmeeinrichtung, eine Auflösung aufweisen, die deutlich geringer ist als die Auflösung der zweiten Bildaufnahmeeinrichtung, insbesondere die Auflösung des Sensors der zweiten Bildaufnahmeeinrichtung. Vorzugsweise kann die erste Bildaufnahmeeinrichtung eine Auflösung von weniger als 200 Zeilen, des Weiteren vorzugsweise von weniger als 130 Zeilen aufweisen, äußerst vorzugsweise nicht mehr als 120 Zeilen. Insbesondere kann die erste Bildaufnahmeeinrichtung eine Auflösung von weniger als 20.000 Pixeln aufweisen. Auf diese Weise ist der Umfang der für die Positionsbestimmung einer Person im Aufnahmebereich verwendeten Daten gegenüber einer Verwendung der Bilddaten der zweiten Bildaufnahmeeinrichtung reduziert, wodurch die Verarbeitung der empfangenen Bilddaten beschleunigt wird. Damit wird die zeitliche Verzögerung bei der Bestimmung der Person verringert, und weniger leistungsfähige und somit kostengünstigere und/oder energiesparende Prozessoren können Anwendung finden.

In der Vorrichtung können in der ersten Bildaufnahmeeinrichtung eine sehr gering auflösende Thermo-Kamera und in der zweiten Bildaufnahmeeinrichtung eine 4k-Kamera vorgesehen sein. Somit funktioniert die Bestimmung der Person auch parallel zu anderen Funktionen der Vorrichtung bei beschränkten Datenverarbeitungsressourcen. Die Lösung ist somit sehr robust, fehlertolerant und weist geringere Verzögerungen in der Datenverarbeitung.

Vorzugsweise kann der Empfang von Wärmebilddaten mittels der ersten Bildaufnahmeeinrichtung datenschutzkonform ausgestaltet sein, z.B. indem keine eindeutig einer Person zuordenbaren Bildinformationen erfasst werden. Insbesondere können die von der ersten Bildaufnahmeeinrichtung empfangenen Bilddaten derart reduziert und/oder verändert sein, dass eine Identifizierung der Person im Aufnahmebereich nicht möglich ist. Dazu können die von der ersten Bildaufnahmeeinrichtung empfangenen Wärmebilddaten verpixelt und/oder runterskaliert sein. Außerdem kann Unschärfealgorithmus auf die Wärmebilddaten angewendet werden. Dabei kann die Reduzierung der Wärmebilddaten insbesondere bereits ihrer Verarbeitung in der Steuer- bzw. Auswerteeinrichtung erfolgen, insbesondere in der ersten Bildaufnahmeeinrichtung.

Die zweite Bildaufnahmeeinrichtung ist vorzugsweise konfiguriert, Bilddaten für die Erstellung eines biometrischen Bildes zu empfangen. Dazu weisen die von der zweiten Bildaufnahmeeinrichtung empfangenen Bilddaten eine Auflösung auf, die idealerweise deutlich größer als die Auflösung der von der ersten Bildaufnahmeeinrichtung empfangenen Bilddaten ist. Mittels der zweiten Bildaufnahmeeinrichtung werden vorzugsweise Bilddaten mit einer Auflösung von mehr als 800 Zeilen, insbesondere mit mehr als 800.000 Pixeln, vorzugsweise mit mehr als 3000 Zeilen und/oder mehr als 7.000.000 Pixeln empfangen.

Die Bestimmung einer Person kann einen oder mehrere der folgenden Schritte umfassen:
- Eine Erkennung von Wärmeinhomogenitäten: Eine zu erkennende Wärmeinhomogenität kann als eine deutliche Abweichung der Temperaturverteilung innerhalb des Aufnahmebereichs definiert sein, insbesondere als Abweichung von der Raumtemperatur. Die Wärmeinhomogenität kann sich auf einen einzelnen Bildpixel eines Wärmebildes oder auf mehrere Bildpixel erstrecken.
- Eine Bestimmung von Wärmeinhomogenitäten mit einer Temperatur in einem vorbestimmten Temperaturbereich, vorzugsweise in einem Temperaturbereich von 25 °C bis 37 °C, weiter vorzugsweise von 30 °C bis 36 °C, insbesondere von 32 °C bis 34 °C,
- Eine Bestimmung von Wärmeinhomogenitäten, die in einem Cluster angeordnet sind.
- Eine Bestimmung eines Clusters von Wärmeinhomogenitäten mit einer Erstreckung, die einer Referenzerstreckung entsprechen und/oder innerhalb eines Referenzerstreckungsbereichs liegen kann. Dabei entsprechen Referenzerstreckung und/oder Referenzerstreckungsbereich vorzugsweise vorbestimmten Werten, die einem menschlichen Körper und/oder einem menschlichen Kopf entsprechen. Referenzerstreckung und/oder Referenzerstreckungsbereich können dazu in einer Speichereinrichtung der Vorrichtung gespeichert sein.
- Eine Bestimmung eines Clusters von Wärmeinhomogenitäten mit einer Kontur, die einer Referenzkontur entsprechen und/oder innerhalb eines vorstimmten Referenzkonturbereiches von einer Referenzkontur liegt. Dabei entsprechen Referenzkontur und/oder Referenzkonturbereich vorzugsweise vorbestimmten Werten, die einem menschlichen Körper und/oder einem menschlichen Kopf entsprechen. Referenzkontur und/oder Referenzkonturbereich können dazu in einer Speichereinrichtung der Vorrichtung gespeichert sein.
- Eine Bestimmung der Position von Wärmeinhomogenitäten im Aufnahmebereich. Wurde ein Cluster von Wärmeinhomogenitäten bestimmt, kann beispielsweise die Position des Flächenschwerpunkts ermittelt werden.

Die im Zusammenhang mit dem Verfahren zum automatisierten Betreiben einer Vorrichtung zum Erfassen von biometrischen Merkmalen (ID-Merkmale) einer Person erläuterten Merkmale können in Verbindung mit der Vorrichtung entsprechend vorgesehen sein.

Die erfindungsgemäße Vorrichtung zum Erfassen von biometrischen Identifizierungsmerkmalen einer Person weist eine erste Bildaufnahmeeinrichtung zum Aufnehmen von Wärmebilddaten einer Person und eine zweite Bildaufnahmeeinrichtung zur Erfassung biometrischer Merkmale der Person, insbesondere zum Aufnehmen eines biometrischen Bildes, auf. Die Vorrichtung ist erfindungsgemäß dafür eingerichtet, Wärmebilddaten eines Aufnahmebereichs der Vorrichtung zu empfangen. Dies geschieht vorzugsweise mittels der ersten Bildaufnahmeeinrichtung.

Des Weiteren ist die Vorrichtung dafür eingerichtet, eine Person im Aufnahmebereich zu bestimmen, insbesondere des Kopfes und/oder des Gesichts der Person, mittels der empfangenen Wärmebilddaten, und wenigstens eine weitere Funktion der Vorrichtung zu aktivieren oder zu starten. Das Starten oder Aktivieren der weiteren Funktion soll insbesondere nach Erkennung des Vorhandenseins einer Person erfolgen.

Für die Auswertung der Wärmebilddaten der ersten Bildaufnahmeeinrichtung und/oder von Bilddaten der zweiten Bildaufnahmeeinrichtung, z.B. zur Bestimmung der Position einer im Aufnahmebereich befindlichen Person, kann die Vorrichtung eine Steuereinrichtung und/oder eine Auswerteeinrichtung aufweisen. Die Steuereinrichtung und/oder Auswerteeinrichtung kann einen Prozessor zur Ausführung von Befehlen sowie eine Speichereinrichtung zur Speicherung von empfangenen und erstellten Daten umfassen.

Erfindungsgemäß wird somit eine Vorrichtung mit einem mit wenigen technischen Mitteln erstellten Personenerkennungs-System bereitgestellt, das ohne zusätzliche Sensoren auskommt. Die Erkennung ist sehr robust, schnell und ressourcenschonend, da nur wenige Bildinformationen benötigt werden. Die Erkennung kann allein auf Grundlage der Wärmebildinformationen der ersten Bildaufnahmeeinrichtung erfolgen. Da keine Detailinformationen über die Person benötigt werden, kann auch der Datenschutz gewährleistet werden.

Das Bild kann eine visuelle Darstellung des Benutzers liefern, das durch Aufnahme des Gesichts des Benutzers, z. B. mit einer Kamera, erhalten wurde. Alternativ kann das Bild des Benutzers auch in einem Speicher eines Sicherheitsdokumentes als digitales Bild gespeichert werden. Bei dem Sicherheitsdokument kann es sich zum Beispiel um einen Personalausweis, ein Visum, einen Führerschein, einen Fahrzeugschein, eine Gesundheitskarte, einen Firmenausweis, eine Bankkarte oder ein anderes Ausweisdokument handeln, das ein identitätsbezogenes Feld mit einem Foto des Benutzers enthält. In einem anderen Beispiel kann ein Identitätstoken in Form einer ID-Anwendung bereitgestellt werden, die auf einem mobilen, tragbaren Endgerät des Benutzers installiert ist. In diesem Fall kann das Bild des Benutzers z. B. auf einem Display des mobilen Endgeräts des Benutzers angezeigt werden.

Die Vorrichtung zum Erfassen von biometrischen Merkmalen der Person kann als Kiosk-Terminal bereitgestellt werden. Das Kiosk-Terminal kann als örtlich fixiertes Terminal oder als örtlich verlagerbar ausgestaltetes (mobiles) Terminal ausgestaltet sein.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung einer erfindungsgemäßen Vorrichtung zum Erfassen von biometrischen Merkmalen einer Person mit einer Person außerhalb des Aufnahmebereichs;
- Fig. 2: eine schematische Darstellung einer erfindungsgemäßen Vorrichtung zum Erfassen von biometrischen Merkmalen einer Person mit einer Person innerhalb des Aufnahmebereichs;
- Fig. 3: eine schematische Darstellung eines erfindungsgemäßen Verfahrens zum automatisierten Betreiben einer Vorrichtung.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht etwas anderes angegeben ist.

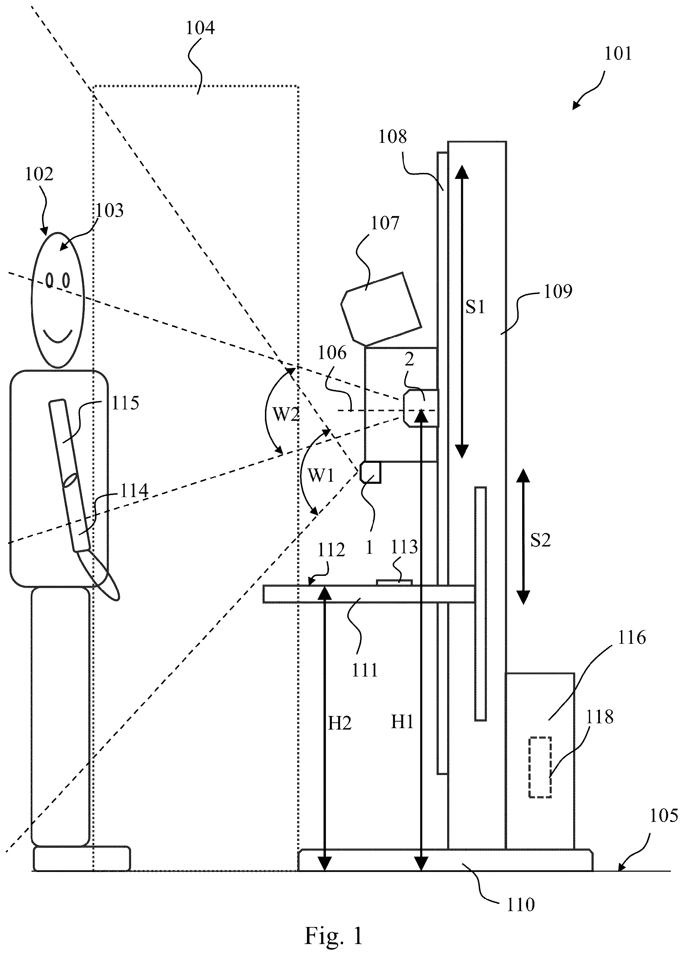

Fig. 1 zeigt eine schematische Darstellung einer Vorrichtung 101 zum Erfassen von biometrischen Merkmalen einer Person 102, die sich im gezeigten Beispiel vor der Vorrichtung 101 in stehender Position, noch außerhalb eines Aufnahmebereichs 104 der Vorrichtung 101 befindet. In der gezeigten Ausgestaltung ist die Vorrichtung 101 als ein Kiosk-Terminal ausgestaltet, welches auf einer Bezugsebene 105 ortsfest oder mobil angeordnet sein kann.

Die Vorrichtung weist eine erste Bildaufnahmeeinrichtung 1 auf, die zur Aufnahme eines Wärmebildes ausgestaltet ist, sowie eine zweite Bildaufnahmeeinrichtung 2, die zur Aufnahme biometrischer Porträts, insbesondere Passbilder ausgestaltet ist. Die erste Bildaufnahmeeinrichtung ist mit einer optischen Einrichtung versehen, die einen Bildwinkel W1 aufweist. Die zweite Bildaufnahmeeinrichtung 2 erfasst aufgrund des Bildwinkels W1 nicht den gesamten Aufnahmebereich 104. Dennoch ist der Bildwinkel W1 ausreichend groß, um auch bei kleinen Personen eine Erkennung der Anwesenheit im Aufnahmebereich 104 zu ermöglichen.

Die Person 102 hat ihr Gesicht 103 der Vorrichtung 101 zugewandt, und zwar der zweiten Bildaufnahmeeinrichtung 2, die eingerichtet ist, ein digitales biometrisches Porträt der Person 102 aufzunehmen. Die zweite Bildaufnahmeeinrichtung 2 weist eine optische Einrichtung mit einem Bildwinkel W2 auf, innerhalb dessen bei geeignetem Abstand und geeigneter Position der Person 102 ein biometrisches Porträt der Person 102 aufnehmbar ist.

Hierfür ist die zweite Bildaufnahmeeinrichtung 2 in einer Höhe H1 über einer Bezugsebene 5, auf der im gezeigten Beispiel die Person 102 sowie die Vorrichtung 101 stehen, derart ausgestaltet, dass entlang einer horizontalen Sicht- oder Aufnahmeachse 106 ein digitales biometrisches Porträt aufgenommen werden kann, aus dem biometrische Gesichtsmerkmale bestimmt werden können.

Bei der Verwendung der zweiten Bildaufnahmeeinrichtung 2 zum Aufnehmen von Porträts wird wahlweise eine Beleuchtungseinrichtung 107 genutzt, um die Person 102 auszuleuchten, insbesondere im Bereich des Gesichts 3. Bei dem dargestellten Ausführungsbeispiel ist die Beleuchtungseinrichtung 107 an der zweiten Bildaufnahmeeinrichtung 2 angeordnet, so dass die Beleuchtungseinrichtung 107 zusammen mit der zweiten Bildaufnahmeeinrichtung 2 höhenverstellbar an der Vorrichtung 101 angeordnet ist. Alternativ kann vorgesehen sein, dass die Beleuchtungseinrichtung 107 unabhängig von der zweiten Bildaufnahmeeinrichtung 2 verlagerbar ist. Auch eine ortsfeste Montage der Beleuchtungseinrichtung 107 an der Vorrichtung 101 kann vorgesehen sein.

Zum Einstellen der Höhe der zweiten Bildaufnahmeeinrichtung 2 über der Bezugsebene 105 weist die Vorrichtung 101 eine Stelleinrichtung 108 auf, die bei dem gezeigten Beispiel an einem Träger 9 gebildet ist. Am unteren Ende des Trägers 9 ist dieser für einen stabilen Stand der Vorrichtung 101 mit einem Vorrichtungsfuß 110 verbunden.

Mittels der Stelleinrichtung 108 ist weiterhin eine Bedieneinrichtung 111 höhenverstellbar hinsichtlich der Bezugsebene 5. Die Höheneinstellung der Bedieneinrichtung erfolgt unabhängig von der Höheneinststellung der zweiten Bildaufnahmeeinrichtung 2. Die Bedieneinrichtung 111 ist beispielhaft ebenfalls an dem Träger 109 höhenverstellbar aufgenommen und stellt eine horizontale Auflagefläche 112 bereit, auf der eine Fingerabdruck- oder Fingerabdrucksensoreinrichtung 13 angeordnet ist, mit der für die Person 102 ein digitaler Fingerabdruck erfasst werden kann.

Zu diesem Zweck ist die Bedieneinrichtung 111 mit Hilfe der Stelleinrichtung gemäß Fig. 1 in einer Höhe über der Bezugsebene 105 angeordnet, die es der Person 102 ermöglicht, eine ergonomische und bequeme Position zum Bedienen der Fingerabdruckeinrichtung 113 einzunehmen, bei der ein Unterarm 114 in im Wesentlichen horizontaler Lage auf der horizontalen Auflagefläche 112 angeordnet wird, was eine bequeme Bedienung der Fingerabdruckeinrichtung 113 mit den Fingern ermöglicht. Der Unterarm 114 ist hierbei gegenüber dem Oberarm 115 abgewinkelt.

Mittels der Stelleinrichtung 108 ist es möglich, die zweite Bildaufnahmeeinrichtung 2 sowie die Fingerabdruckeinrichtung 113 auf der Bedieneinrichtung 111 unabhängig und getrennt voneinander hinsichtlich der Höhe über der Bezugsebene 105 einzustellen, derart, dass das Aufnehmen des digitalen biometrischen Porträts wie auch das Erfassen des digitalen Fingerabdrucks mittels der Fingerabdruckeinrichtung 113 korrekt und für die Person 102 bequem erfolgen können. Die Höhenverstellbarkeit für zweite Bildaufnahmeeinrichtung 2 und der Fingerabdruckeinrichtung 113, die Teil der Bedieneinrichtung 111 ist, ist in Fig. 1 schematisch anhand von Pfeilen A und B dargestellt, wobei Bereiche der Höhenverstellbarkeit je nach Anwendungsfall konfigurierbar sind.

Zur Steuerung einzelner Betriebsfunktionen der Vorrichtung 101 ist eine Steuereinrichtung 116 vorgesehen. Beispielsweise kann mit der Steuereinrichtung 116 die Höhenverstellung von zweiter Bildaufnahmeeinrichtung 2 und Bedieneinrichtung 111 mit Fingerabdruckeinrichtung 113 mittels der Stelleinrichtung 108 gesteuert werden. Die Steuereinrichtung 116 umfasst eine Auswerteeinrichtung, die der Auswertung empfangener Bilddaten dient. Die Steuereinrichtung 116 weist dazu einen hier nicht dargestellten Prozessor sowie eine Speichereinrichtung 118 auf.

Mit der Steuereinrichtung 116 können weitere Funktionen gesteuert werden, beispielsweise das Erfassen des digitalen biometrischen Portraits mittels der zweiten Bildaufnahmeeinrichtung 2, das Betätigen der Beleuchtungseinrichtung 107 und / oder das Erfassen des digitalen Fingerabdrucks mit der Fingerabdruckeinrichtung 13.

Bei der Vorrichtung 101 zum Erfassen von biometrischen Identifizierungsmerkmalen einer Person gemäß Fig. 1 bildet die erste Bildaufnahmeeinrichtung 1 gemeinsam mit der Steuereinrichtung 116 eine Personensensor- oder Personendetektionseinrichtung. Die mittels der ersten Bildaufnahmeeinrichtung 1 empfangenen Wärmebilddaten werden zur Bestimmung der Person 102 in der Steuereinrichtung 116 ausgewertet. Auf diese Weise kann innerhalb des Aufnahmebereiches 104 die Annäherung der Person 102 an die Vorrichtung 101 und / oder die Präsenz der Person 102 gegenüber der Vorrichtung zu detektiert werden. Hierauf kann dann ein Prozess zur Einstellung der Vorrichtung and die Größe der Person und/oder ein Prozess zum Erfassen der biometrischen Identifizierungsmerkmale automatisch getriggert werden.

Bei dem gezeigten Ausführungsbeispiel ist die erste Bildaufnahmeeinrichtung 1 mit der zweiten Bildaufnahmeeinrichtung 2 verbunden und so mit dieser zusammen höhenverstellbar an dem Träger 109 aufgenommen. Alternativ kann die erste Bildaufnahmeeinrichtung 1 getrennt von der zweiten Bildaufnahmeeinrichtung 2 an der Vorrichtung 101 angeordnet sein, zum Beispiel ortsfest oder verlagerbar an dem Träger 9.

Die Speichereinrichtung 118 der Steuereinrichtung 116 ist eingerichtet, Daten zumindest vorübergehend elektronisch zu speichern. Hiervon umfasst sein können zum Beispiel empfangene Wärmebilddaten der ersten Bildaufnahmeeinrichtung 1, empfangene Bilddaten der zweiten Bildaufnahmeeinrichtung 2, Steuerungsdaten zum Steuern der Vorrichtung 101 und/oder der Bedieneinrichtung 111 und/oder der Fingerabdruckeinrichtung 113 beim Erfassen der biometrischen Identifizierungsmerkmale.

Auch Referenzdaten zur Bestimmung einer Person anhand empfangener Wärmebilddaten können in der Speichereinrichtung 118 hinterlegt sein, sowie Zuordnungsdaten, die für Personen unterschiedlicher Größe eine der jeweiligen Größe angepasste Zuordnung zwischen einer Referenzhöhe der zweiten Bildaufnahmeeinrichtung 2 und einer zugeordneten Referenzposition, insbesondere Referenzhöhe der Bedieneinrichtung 111 anzeigen. Die Höhenangaben können sich zum Beispiel auf die Bezugsebene 105 beziehen.

Die Zuordnungsdaten geben damit insbesondere an, in welchem Abstand die Bedieneinrichtung 111 in Bezug auf die horizontale Sicht- oder Aufnahmeachse 6 (bzw. die entsprechende Höhe der zweiten Bildaufnahmeeinrichtung 2) anzuordnen ist, um der Person 102 eine bequeme und ergonomisch angepasste Position beim Bedienen der Bedieneinrichtung 111 zu ermöglichen, derart, dass hierbei der gegenüber dem Oberarm 115 abgewinkelte Unterarm 114 in im Wesentlichen horizontaler Lage gehalten werden kann, wobei der Unterarm 114 hierbei auf der Auflagefläche 112 der Bedieneinrichtung 111 zur Auflage kommt.

Die Zuordnungsdaten können zwischen stehender und sitzender Position der Person 102 unterscheiden, so dass insbesondere auch für Rollstuhlfahrer eine entsprechende Höheneinstellung für zweite Bildaufnahmeeinrichtung 2 und Bedieneinrichtung 111 automatisiert vorgenommen werden kann.

Die Person 102 in Fig. 1 hat sich noch nicht in den Aufnahmebereich der Vorrichtung 1 begeben. Es befinden sich zwar bereits Abschnitte des Körpers der Person 102 im Aufnahmebereich 104, jedoch insbesondere der Kopf Mittels der ersten Bildaufnahmeeinrichtung 1 wird aus diesem Grund noch keine Person im Aufnahmebereich 104 detektiert. Die zweite Bildaufnahmeeinrichtung 2 sowie die Bedieneinrichtung 111 bleiben zu diesem Zeitpunkt in einer jeweiligen Ausgangs- oder Ruhestellung bezüglich der Höhe über der Bezugsebene 105 angeordnet.

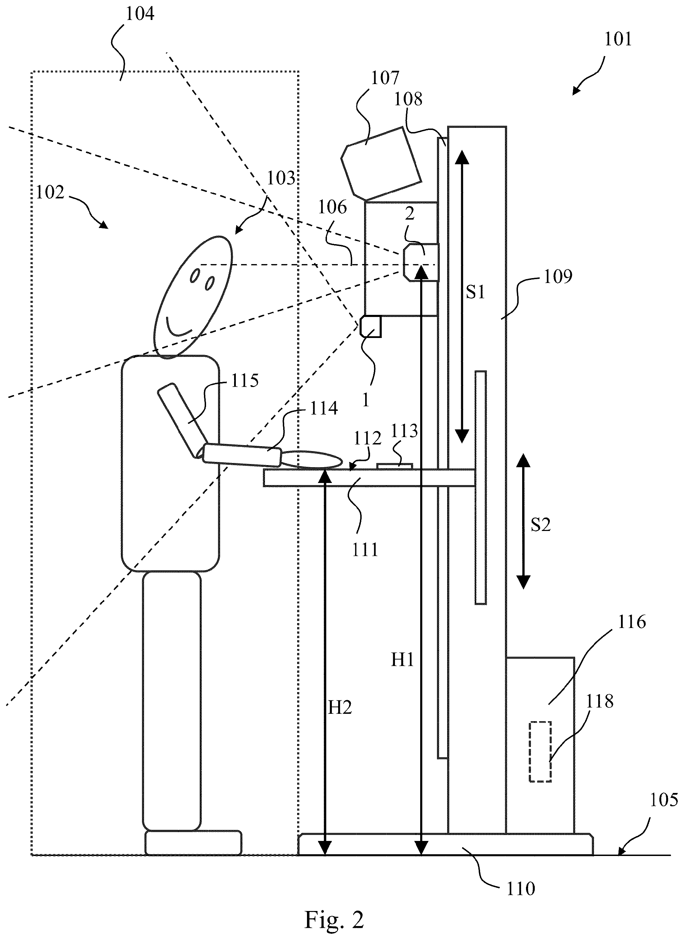

Fig. 2 zeigt die Vorrichtung, nachdem sich die Person 102 in den Aufnahmebereich 104 begeben hat.

Weil Wärmebilddaten des Aufnahmebereiches 104 kontinuierlich mittels der ersten Bildaufnahmeeinrichtung 1 empfangen werden, wird bei Annährung oder Präsenz der Person 102 im Aufnahmebereich 104 die Person 102 mittels der Wärmebilddaten in der Steuereinrichtung 116 bestimmt, d.h. das Vorhandensein der Person 102 wird erkannt. Erst wenn die Person 102 bestimmt ist, erfolgt das Aktivieren und/oder Starten wenigstens einer weiteren Funktion der Vorrichtung. Beispielsweise kann nun mittels der Wärmebilddaten die Position der Person im Aufnahmebereich 104, insbesondere der Kopf- und/oder Gesichtsposition der Person, bestimmt werden. Neben einer Höhenposition des Kopfes der Person 102 kann auch der Abstand der Person von der Vorrichtung bestimmt werden, beispielsweise indem die Größe eines Wärmeclusters in empfangenen Wärmebilddaten bestimmt wird.

Anhand der Kopf- und/oder Gesichtsposition der Person wird eine für die Erfassung biometrischer Merkmale der Person geeignete Aufnahmeposition der zweiten Bildaufnahmeeinrichtung, in welcher das biometrische Bild der Person mittels der zweiten Bildaufnahmeeinrichtung aufnehmbar ist, bestimmt. Die Position entspricht insbesondere einer Position, in der ICAO-Kriterien entsprechende Passbilder durch die zweite Bildaufnahmeeinrichtung aufgenommen werden können. Anschließend wird die zweite Bildaufnahmeeinrichtung 2 mittels der Stelleinrichtung 108 in die Aufnahmeposition in ihrer Höhe verlagert.

Während dieser Höhenverstellung kann die zweite Bildaufnahmeeinrichtung 2 mehrfach digitale Bilder erfassen und es kann ermittelt werden, ob hieraus ein digitales biometrisches Bild erstellbar ist, welches die Bestimmung von biometrischen Gesichtsmerkmalen ermöglicht. Wird festgestellt, dass eine Bildaufnahme diese Voraussetzung nicht erfüllt, kann eine weitere Höhenverstellung erfolgen oder die Bildaufnahme zunächst fortgesetzt werden, um eine zu häufige Nachjustierung der Höheneinstellung zu vermeiden. Wird sodann bestimmt, dass eine weitere Bildaufnahme den Voraussetzungen für ein digitales biometrisches Bild genügt, ist die zweite Bildaufnahmeeinrichtung 2 in Bezug auf die Person 102 in einer Höhe über der Bezugsebene 105 angeordnet, in welcher die optische Achse der zweiten Bildaufnahmeeinrichtung 2 bzw. die Aufnahmeachse 106 für die Erstellung eines biometrischen Gesichtsbildes passend ausgerichtet ist. Der Prozess zum Einstellen der Höhe der zweiten Bildaufnahmeeinrichtung 2 ist damit abgeschlossen.

Sodann wird auf die Zuordnungsdaten zugegriffen, die in der Speichereinrichtung 118 gespeichert sind, die mit der die Steuereinrichtung 116 kabelgebunden oder kabellos elektronische Daten austauschen kann. In den Zuordnungsdaten wird für die Höhe, in welcher die zweite Bildaufnahmeeinrichtung 2 bzw. die Aufnahmeachse der zweiten Bildaufnahmeeinrichtung 2 nach der Höheneinstellung angeordnet ist, eine entsprechende Referenzhöhe bestimmt, die gleich der aktuellen Höhe der zweiten Bildaufnahmeeinrichtung 2 ist oder dieser innerhalb vorgebbarer Fehlergrenzen entspricht. Aus den Zuordnungsdaten wird für diese Referenzhöhe dann die zugeordnete Referenzposition (insbesondere Referenzhöhe) für die Bedieneinrichtung 111 bestimmt. Alternativ oder ergänzend können die Zuordnungsdaten die zugeordnete Referenzposition auch für die Fingerabdruckeinrichtung 113 und / oder die Auflagefläche 112 angeben, welche dann für die Position (Höhe) Bedieneinrichtung 111 stehen. Zweck der zugeordneten Referenzposition ist es, die Bedieneinrichtung 111 in Bezug auf die zweite Bildaufnahmeeinrichtung 2 derart hinsichtlich ihrer Höhe einzustellen, dass die Person 102 die in Fig. 2 gezeigte ergonomische und bequeme Position zum Bedienen der Bedieneinrichtung 111 einnehmen kann, also der Unterarm 114 in im Wesentlichen horizontaler Lage gehalten werden kann.

Nach dem Bestimmen der zugeordneten Referenzposition (insbesondere Referenzhöhe) aus den Zuordnungsdaten wird die Bedieneinrichtung 111 von der in Fig. 1 gezeigten in die in Fig. 4 gezeigte Höhenstellung verlagert, was bei dem gezeigten Ausführungsbeispiel mittels der Stelleinrichtung 108 ausgeführt wird. Sodann können für die Person 102 biometrische Identifizierungsmerkmale mittels der zweiten Bildaufnahmeeinrichtung 2 und / oder der Fingerabdruckeinrichtung 113 erfasst werden. Die Vorrichtung 101 wird hierzu hinsichtlich der Positionierung von zweiter Bildaufnahmeeinrichtung 2 und Bedieneinrichtung 111 vorab automatisiert eingestellt.

Die Zuordnungsdaten können auf unterschiedliche Art und Weise bestimmt werden. Beispielsweise kann vorgesehen sein, für Personen unterschiedlicher Größe, sei es in stehender und / oder sitzender Stellung, experimentell Messdaten an einer der Vorrichtung 101 zum Erfassen von biometrischen Identifizierungsmerkmalen entsprechenden Vorrichtung zu detektieren. Hierzu würde dann jeweils die Höhe der zweiten Bildaufnahmeeinrichtung 2 sowie der Fingerabdruckeinrichtung 113 / der Bedieneinrichtung 111 mittels zugeordneter Messeinrichtung erfasst und gespeichert. Derart experimentell erfasste Messwerte für Personen unterschiedlicher Größe können wahlweise gemittelt werden, um schließlich die anzuwendenden Zuordnungsdaten zu bestimmen.

Für eine Aufnahmeposition, in der biometrische Merkmale der Person, in diesem Fall mittels eines biometrischen Gesichtsbildes aufgenommen werden kann, ist die zweite Bildaufnahmeeinrichtung 2 in einer Höhe H1 über einer Bezugsebene 5, auf der im gezeigten Beispiel die Person 102 sowie die Vorrichtung 101 stehen, so angeordnet, dass zwischen der zweiten Bildaufnahmeeinrichtung 2, insbesondere einer Aufnahmeoptik die zweite Bildaufnahmeeinrichtung 2, und dem Gesicht 103 der Person 102 eine horizontale Sicht- oder Aufnahmeachse 106 ausgebildet ist, entlang welcher die zweite Bildaufnahmeeinrichtung 2 das digitale biometrische Porträt derart aufnehmen kann, dass aus den digitalen Daten für das Porträt biometrische Gesichtsmerkmale bestimmt werden können.

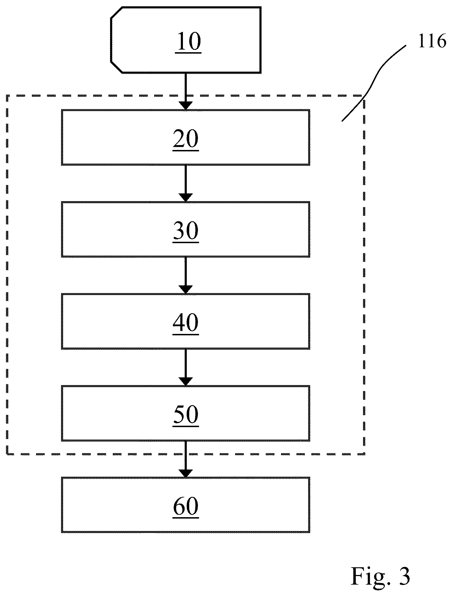

In Fig. 3 sind Schritte eines erfindungsgemäßen Verfahrens dargestellt, die zum automatisierten Betreiben der in Fig. 1 und Fig. 2 gezeigten Vorrichtung zum Erfassen eines biometrischen Gesichtsbildes einer Person ausgeführt werden.

Zunächst werden Wärmebilddaten eines Aufnahmebereichs der Vorrichtung empfangen, 10. Die nachfolgenden Schritte 20 bis 50 werden in der Steuereinrichtung ausgeführt. Für die Ausführung dieser Schritte in der Steuereinrichtung 116 bzw. in der in der Steuereinrichtung enthaltenen Auswerteeinrichtung werden die empfangenen Wärmebilddaten von der ersten Bildaufnahmeeinrichtung an die Steuereinrichtung 116 übertragen. Befindet sich eine Person im Aufnahmebereich der Vorrichtung, erfolgt mittels der Wärmebilddaten eine Erkennung der Person im Aufnahmebereich, 20, insbesondere des Kopfes oder des Gesichtes der Person. Nun wird mittels der Steuereinrichtung 116 die Aufnahmebereitschaft der Person bestimmt, 30. Beispielsweise kann dazu die Position der Person im Aufnahmebereich, insbesondere der Kopf- und/oder Gesichtsposition der Person mittels der empfangenen Wärmebilddaten bestimmt werden.

Ist die Person als aufnahmebereit erkannt, erfolgt ein Aktivieren und/oder Starten wenigstens einer weiteren Funktion der Vorrichtung, 40. Beispielsweise kann nun anhand der bestimmten Position der Person im nächsten Schritt eine Bestimmung einer für die Erfassung biometrischer Merkmale der Person geeigneten Aufnahmeposition der zweiten Bildaufnahmeeinrichtung bestimmt werden, in welcher die biometrischen Merkmale der Person mittels der zweiten Bildaufnahmeeinrichtung aufnehmbar sind, oder, gemäß einer alternativen Ausführungsform, einer der geeigneten Aufnahmeposition angenäherten Aufnahmeposition, 50.

Anhand der ermittelten geeigneten oder annähernd geeigneten Aufnahmeposition folgt nun ein Verlagern der zweiten Bildaufnahmeeinrichtung mittels der Stelleinrichtung in die entsprechende Position. Ein entsprechendes Steuersignal wird dazu von der Steuereinrichtung an die Stelleinrichtung übertragen, 50. Anschließend wird mittels der Stelleinrichtung die Vorrichtung an die im Aufnahmebereich befindliche Person angepasst.

Mit einer verringerten Auflösung der von der zweiten Bildaufnahmeeinrichtung empfangenen und/oder übertragenen Wärmebilddaten kann der durch die Steuereinrichtung zu verarbeitende Umfang an Wärmebilddaten bzw. der Wärmebilddatenstrom reduziert und somit die Bestimmung einer Aufnahmeposition beschleunigt werden. Des Weiteren ermöglicht die verringerte Auflösung und/oder eine Reduzierung der in dem Wärmebilddatenstrom enthaltenden Informationen, z.B. durch Anwendung eines Unschärfealgorithmus bzw. durch Verpixelung des empfangenen Wärmebildes eine Datenschutzkonforme Verarbeitung der empfangenen Wärmebilddaten. Dabei kann die Reduzierung der Wärmebilddaten insbesondere bereits in der ersten Bildaufnahmeeinrichtung erfolgen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: erste Bildaufnahmeeinrichtung
- 2: zweite Bildaufnahmeeinrichtung
- 10: Empfang von Wärmebilddaten des Aufnahmebereichs
- 20: Erkennung einer Person im Aufnahmebereich
- 30: Bestimmung der Position der Person im Aufnahmebereich
- 40: Bestimmung einer einzustellenden Position der zweiten Bildaufnahmeeinrichtung
- 50: Verlagern der zweiten Bildaufnahmeeinrichtung in die bestimmte Position
- 60: Empfang von HD-Bilddaten des Aufnahmebereichs
- 70: Bestimmung der Position der Person im Aufnahmebereich
- 80: Bestimmung einer einzustellenden Position der zweiten Bildaufnahmeeinrichtung
- 90: Verlagern der zweiten Bildaufnahmeeinrichtung in die bestimmte Position
- 101: Vorrichtung
- 102: Person
- 103: Gesicht
- 104: Aufnahmebereich
- 105: Bezugsebene
- 106: Aufnahmeachse
- 107: Beleuchtungseinrichtung
- 108: Stelleinrichtung
- 109: Träger
- 110: Vorrichtungsfuß
- 111: Bedieneinrichtung
- 112: Auflagefläche
- 113: Fingerabdruckeinrichtung
- 114: Unterarm
- 115: Oberarm
- 116: Steuereinrichtung
- 118: Speichereinrichtung
- H1: Höhe der zweiten Bildaufnahmeeinrichtung
- H2: Höhe der Bedieneinrichtung
- S1: Verstellweg der zweiten Bildaufnahmeeinrichtung
- S2: Verstellweg der Bedieneinrichtung
- W1: Bildwinkel der ersten Bildaufnahmeeinrichtung
- W2: Bildwinkel der zweiten Bildaufnahmeeinrichtung

## Patentansprüche

1. Verfahren zum automatisierten Betreiben einer Vorrichtung (101) zum Erfassen von biometrischen Merkmalen einer Person, aufweisend:
- Bereitstellen einer Vorrichtung (101) zum Erfassen von biometrischen Merkmalen der Person (102), mit einer ersten Bildaufnahmeeinrichtung (1) zum Empfangen von Wärmebilddaten der Person (102) sowie einer zweiten Bildaufnahmeeinrichtung (2) zur Erfassung biometrischer Merkmale der Person (102);
- Empfangen von Wärmebilddaten eines Aufnahmebereichs (104) der Vorrichtung (101) mittels der ersten Bildaufnahmeeinrichtung (1);
- Bestimmung der Person (102) im Aufnahmebereich, insbesondere des Kopfes und/oder des Gesichts der Person (102), mittels der empfangenen Wärmebilddaten;
- Aktivieren und/oder Starten wenigstens einer weiteren Funktion der Vorrichtung (101).

2. Verfahren nach Anspruch 1, wobei eine Bedieneinrichtung (111), eine Betriebsanzeige, eine Höheneinstellung und/oder die zweite Bildaufnahmeeinrichtung (2) aktiviert wird.

3. Verfahren nach einem der obigen Ansprüche, wobei mittels der ersten Bildaufnahmeeinrichtung (1) eine Wärmebildfolge, insbesondere Serienbilder und/oder ein Videostream empfangen wird.

4. Verfahren nach einem der obigen Ansprüche, wobei der Empfang von Wärmebilddaten sowie die Bestimmung der Person (102) kontinuierlich erfolgt und nach dem Aktivieren und/oder Starten wenigstens einer weiteren Funktion der Vorrichtung (101) die Aktivierung und/oder Ausführung der weiteren Funktion der Vorrichtung beendet wird, falls keine Person (102) mehr im Aufnahmebereich bestimmt wird.

5. Verfahren nach einem der obigen Ansprüche, wobei mittels der zweiten Bildaufnahmeeinrichtung (2) eine Bildfolge, insbesondere Serienbilder und/oder ein Videostream empfangen wird.

6. Verfahren nach einem der obigen Ansprüche, wobei die Wärmebilddaten von der ersten Bildaufnahmeeinrichtung (1) derart reduziert empfangen und/oder nach dem Empfang reduziert werden, dass keine Identifizierungsmerkmale oder zur Identifizierung der Person (102) geeignete Merkmale zwischengespeichert werden.

7. Verfahren nach einem der obigen Ansprüche, wobei die Bestimmung einer Person (102) einen oder mehrere der folgenden Schritte umfasst:
a) Erkennung von Wärmeinhomogenitäten,
b) Bestimmung von Wärmeinhomogenitäten mit einer Temperatur in einem vorbestimmten Temperaturbereich, vorzugsweise in einem Temperaturbereich von 25 °C bis 37 °C, weiter vorzugsweise von 30 °C bis 36 °C, insbesondere von 32 °C bis 34 °C,
c) Bestimmung eines Clusters von Wärmeinhomogenitäten
i. mit einer Erstreckung, die einer Referenzerstreckung entsprechen und/oder innerhalb eines Referenzerstreckungsbereichs liegen kann.
ii. und/oder einer Kontur, die einer Referenzkontur entsprechen und/oder innerhalb eines vorstimmten Referenzkonturbereiches von einer Referenzkontur liegt.
d) Bestimmung der Position von Wärmeinhomogenitäten im Aufnahmebereich (104).

8. Verfahren nach einem der obigen Ansprüche, wobei die Aufnahmebereitschaft der Person (102) durch einen oder mehrere der folgenden Schritte bestimmt wird:
- Bestimmung der Position der Person (102) im Aufnahmebereich;
- Bestimmung der Ausrichtung des Körpers, insbesondere des Kopfes der Person (102);
- Bestimmung von Bewegungen der Person (102).

9. Verfahren nach einem der obigen Ansprüche, wobei nach der Bestimmung einer Person (102) mittels der zweiten Bildaufnahmeeinrichtung Bilddaten empfangen werden, wobei mittels der empfangenen Bilddaten die Position der Person (102) bestimmt wird.

10. Verfahren nach einem der obigen Ansprüche, wobei nach Bestimmung der Person (102) im Aufnahmebereich (104) bis zum Abschluss eines Erfassungsvorgangs zur Erfassung biometrischer Merkmale der Person (102) kontinuierlich mittels der von der ersten Bildaufnahmeeinrichtung (1) empfangenen Wärmebilddaten das Vorhandensein der Person (102) im Aufnahmebereich (104) geprüft wird, wobei bei einem Nichtvorhandensein der Person der Empfang von Bilddaten mittels der zweiten Bildaufnahmeeinrichtung (2) unterbrochen wird.

11. Vorrichtung (101) zum Erfassen von biometrischen Identifizierungsmerkmalen einer Person, aufweisend:
- eine erste Bildaufnahmeeinrichtung (1) zum Aufnehmen von Wärmebilddaten der Person (102),
- eine zweite Bildaufnahmeeinrichtung (2) zur Erfassung biometrischer Merkmale der Person (102), insbesondere zum Aufnehmen eines biometrischen Bildes,
wobei die Vorrichtung (101) für Folgendes eingerichtet ist:
- Empfangen von Wärmebilddaten des Aufnahmebereichs (104) der Vorrichtung (101),
- Bestimmung der Person (102) im Aufnahmebereich, insbesondere des Kopfes und/oder des Gesichts der Person (102), mittels der empfangenen Wärmebilddaten,
- Aktivieren und/oder Starten wenigstens einer weiteren Funktion der Vorrichtung (101).

12. Vorrichtung (101) nach Anspruch 8 oder 9, wobei die Vorrichtung (101) zum Erfassen von biometrischen Merkmalen der Person (102) als Kiosk-Terminal ausgestaltet ist.

13. Vorrichtung nach Anspruch 11 oder 12, wobei die erste Bildaufnahmeeinrichtung (1) konfiguriert ist, keine zur Identifizierung der Person (102) geeigneten Merkmale zu erfassen.
